(19)

Europäisches Patentamt
European Patent Office
Office européen des brevets

(11) **EP 4 761 084 A1**

(12) **EUROPEAN PATENT APPLICATION**

(43) Date of publication:
**17.06.2026 Bulletin 2026/25**

(51) International Patent Classification (IPC):
*H02M 1/00* (2006.01)     *H02M 3/335* (2006.01)

(21) Application number: **25221529.8**

(22) Date of filing: **08.12.2025**

(52) Cooperative Patent Classification (CPC):
**H02M 3/33523; H02M 1/0025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.12.2024 US 202418977738**

(71) Applicant: **NXP USA, Inc.**
**Austin, TX 78735 (US)**

(72) Inventor: **Bertolini, Luca**
**5656AG Eindhoven (NL)**

(74) Representative: **Krott, Michel**
**NXP Semiconductors**
**Intellectual Property Group**
**High Tech Campus 60**
**5656 AG Eindhoven (NL)**

(54) **CONTROL CIRCUIT FOR FLYBACK CONVERTER AND METHOD OF CONTROLLING A FLYBACK CONVERTER**

(57)     Embodiments of a control circuit for a flyback converter and a method for controlling a flyback converter are disclosed. In an embodiment, a control circuit includes an integrator circuit configured to output a ramp signal in response to an AC feedback signal from a primary side of a flyback converter, a threshold generator circuit configured to output a threshold voltage in response to the ramp signal, wherein the threshold voltage is generated as a function of a peak voltage of the ramp signal, a comparator circuit configured to compare the ramp signal to the threshold voltage and to output a sampling signal when the ramp signal drops below the threshold voltage, and a sample and hold circuit configured to sample the AC feedback signal in response to the sampling signal and to output a sample of the AC feedback signal that is used to control the flyback converter.

FIG. 2A

Processed by Luminess, 75001 PARIS (FR)

**Description**

BACKGROUND

A power converter converts electric voltage and current from a source to a target voltage and current to power a load. A flyback converter can be used to provide power supply across galvanic isolated domains. Often times, the output regulation of a flyback converter relies on a feedback that crosses a voltage isolation barrier using optical components. A drawback of using optical components is that their performance can degrade over time due to aging, which may affect feedback accuracy and long-term reliability.

SUMMARY

Embodiments of a control circuit for a flyback converter and a method for controlling a flyback converter are disclosed. In an embodiment, a control circuit includes an integrator circuit configured to output a ramp signal in response to an AC feedback signal from a primary side of a flyback converter, a threshold generator circuit configured to output a threshold voltage in response to the ramp signal, wherein the threshold voltage is generated as a function of a peak voltage of the ramp signal, a comparator circuit configured to compare the ramp signal to the threshold voltage and to output a sampling signal when the ramp signal drops below the threshold voltage, and a sample and hold circuit configured to sample the AC feedback signal in response to the sampling signal and to output a sample of the AC feedback signal that is used to control the flyback converter.

In an example, the integrator circuit is configured to integrate the AC feedback signal to generate the ramp signal, and wherein the threshold generator circuit includes a first capacitor and a second capacitor, wherein the threshold voltage is a function of a ratio of a capacitance of the first capacitor to a sum of the capacitance of the first capacitor plus a capacitance of the second capacitor.

In an example, the threshold generator circuit includes a first capacitor and a second capacitor, wherein the threshold voltage is a function of a ratio of a capacitance of the first capacitor to a sum of the capacitance of the first capacitor plus a capacitance of the second capacitor.

In an example, the threshold generator circuit includes a first capacitor and a second capacitor, wherein the threshold voltage is a function of the peak voltage of the ramp signal and a ratio of a capacitance of the first capacitor to a sum of the capacitance of the first capacitor plus a capacitance of the second capacitor.

In an example, the threshold generator circuit includes a first capacitor (Cthreshold) and a second capacitor (Cpeak), wherein the threshold voltage (Vthreshold) is determined as a function of the peak voltage of the ramp signal (Vpeak) as: $V_{threshold} = V_{peak} \times (C_{threshold}/(C_{peak}+C_{threshold}))$.

In an example, the integrator circuit is configured to integrate the AC feedback signal to generate the ramp signal.

In an example, the integrator circuit includes an integrator resistor, an integrator capacitor, and integrator comparator.

In an example, the integrator circuit further includes a reset switch configured to reset the integrator capacitor at each switching cycle of the flyback converter.

In an example, the control circuit further includes sample pulse generator logic configured to generate a feedback sample signal in response to the ramp signal dropping below the threshold voltage.

In an example, the control circuit further includes a voltage divider to scale the AC feedback signal prior to the integrator circuit.

In an example, the control circuit further includes a driver circuit configured to drive a switch at the primary side of the flyback converter in response to the sample of the AC feedback signal from the sample and hold circuit.

A method for controlling a flyback converter is also disclosed. The method involves generating a ramp signal in response to an AC feedback signal from a primary side of a flyback converter, generating a threshold voltage in response to the ramp signal, wherein the threshold voltage is generated as a function of a peak voltage of the ramp signal, generating a sampling signal when the ramp signal drops below the threshold voltage, sampling the AC feedback signal in response to the sampling signal, and driving a switch at a primary side of the flyback converter in response to the sample of the AC feedback signal.

In an example, generating the ramp signal includes integrating the AC feedback signal, and wherein generating the threshold voltage includes obtaining a ratio of a capacitance of a first capacitor to a sum of the capacitance of the first capacitor plus a capacitance of a second capacitor upon exposure to the ramp signal.

In an example, generating the ramp signal includes integrating the AC feedback signal, and wherein generating the threshold voltage includes obtaining a ratio of a capacitance of a first capacitor to a sum of the capacitance of the first capacitor plus a capacitance of a second capacitor upon exposure to the ramp signal, and wherein the threshold voltage is a function of the peak voltage of the ramp signal and the ratio of the capacitance of the first capacitor to the sum of the capacitance of the first capacitor plus the capacitance of the second capacitor.

In an example, generating the ramp signal includes integrating the AC feedback signal.

In an example, the method further involves scaling the AC feedback signal prior to the integration.

Another example of a control circuit is disclosed. The control circuit includes an integrator circuit configured to output a ramp signal in response to an AC feedback signal from a primary side of a flyback converter, threshold generator means configured to output a threshold voltage in response to the ramp signal, wherein the threshold voltage is generated as a function of a peak voltage of the ramp signal, a comparator circuit configured to compare the ramp signal to the threshold voltage and to output a sampling signal when the ramp signal drops below the threshold voltage, and a sample and hold circuit configured to sample the AC feedback signal in response to the sampling signal and to output a sample of the AC feedback signal that is used to control the flyback converter.

In an example, the integrator circuit is configured to integrate the AC feedback signal to generate the ramp signal, and wherein the threshold generator circuit includes a first capacitor and a second capacitor, wherein the threshold voltage is a function of a ratio of a capacitance of the first capacitor to a sum of the capacitance of the first capacitor plus a capacitance of the second capacitor.

In an example, the threshold generator circuit includes a first capacitor and a second capacitor, wherein the threshold voltage is a function of a ratio of a capacitance of the first capacitor to a sum of the capacitance of the first capacitor plus a capacitance of the second capacitor.

In an example, the threshold generator circuit includes a digital processor configured to model a first capacitor and a second capacitor, wherein the threshold voltage is a function of a ratio of a capacitance of the first capacitor to a sum of the capacitance of the first capacitor plus a capacitance of the second capacitor.

Other aspects in accordance with the invention will become apparent from the following detailed description, taken in conjunction with the accompanying drawings, illustrated by way of example of the principles of the invention.

BRIEF DESCRIPTION OF THE DRAWINGS

Fig. 1 depicts a flyback converter that includes a flyback control circuit.

Fig. 2A depicts an example of a flyback control circuit of a flyback converter and Fig. 2B depicts a power train of the flyback converter, in which the flyback converter is configured to sample a scaled AC feedback signal as disclosed herein.

Fig. 3 is a signal diagram that shows time-aligned signals of the flyback converter of Figs. 2A and 2B.

Fig. 4 is a signal diagram that shows time-aligned signals of the flyback converter of Figs. 2A and 2B.

Fig. 5 is a process flow diagram of an example method for controlling a flyback converter.

Throughout the description, similar reference numbers may be used to identify similar elements.

DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

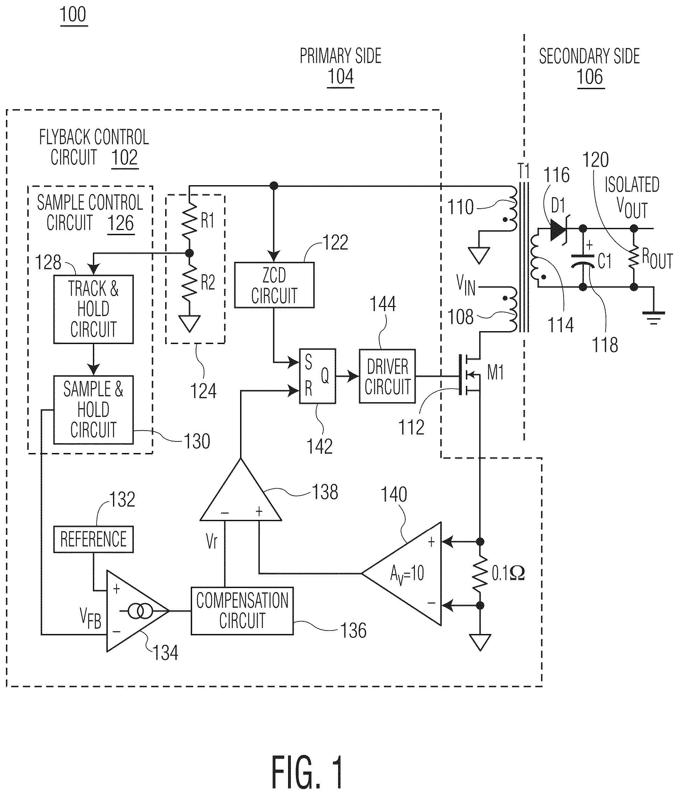

Fig. 1 depicts a flyback converter 100 that includes a flyback control circuit 102. The flyback converter includes a primary side 104 and a secondary side 106 as is known in the field. The primary side includes a primary winding 108, an auxiliary winding 110, and a first switch 112 (e.g., a MOSFET, M1), and the secondary side 106 includes a secondary winding 114, a second switch 116 (e.g., a diode, D1), and a capacitor 118 (C1). The primary side of the flyback converter is coupled to the flyback control circuit 102 and the secondary side of the flyback converter is coupled to a load 120 (e.g., Rout) and provides an isolated output voltage (VOUT) in response to a received alternating current (AC) input voltage (VIN).

The flyback control circuit 102 includes a zero current detection (ZCD) circuit 122, a voltage divider circuit 124 formed by resistors R1 and R2, a sample control circuit 126 that includes a track and hold circuit 128 and a sample and hold circuit 130, a reference voltage source 132, an error amplifier 134, a compensation circuit 136, a current comparator 138, a current amplifier 140, an S-R latch 142 (SR flip flop), and a driver circuit 144. In the example of Fig. 1, a feedback signal (VFB) at the primary side 104 of the flyback converter 100 is isolated from the secondary side 106 of the flyback converter and no optical feedback link exists between the primary side 104 of the flyback converter and the secondary side 106 of the flyback converter. In operation, a scaled feedback signal from the auxiliary winding 110 is tracked and sampled at the sample control circuit 126 and then compared at the error amplifier 134 to a reference voltage from the reference voltage source 132. The output from the error amplifier 134 is compared to the output from the current amplifier 140 at the current comparator 138. The result is used to control the switch (M1) on the primary side of the flyback converter, which controls the conversion of power from the primary side of the flyback converter to the secondary side of the flyback converter. Although an example of a flyback converter and a flyback control circuit are described with reference to Fig. 1, other examples of flyback converters and flyback control circuits are possible.

Although the configuration of the flyback converter 100 described with reference to Fig. 1 provides isolated feedback signal sampling using a track and hold circuit and a sample and hold circuit and without optical coupling between the primary side 104 of the flyback converter and the secondary side 106 of the flyback converter (e.g., isolated from the secondary side of the flyback converter), the circuit may suffer some inconsistencies due to process and performance variations. In accordance with an example, a scaled AC feedback signal from a winding of the primary side of a flyback converter is integrated to create a ramp signal, from which a peak value threshold voltage is generated. The peak value threshold voltage is then used to generate a trigger pulse to sample the scaled AC feedback signal at the right moment, for example, towards the end of the secondary stroke. Sampling the scaled AC feedback signal towards the end of the secondary stroke can reduce the impact of resistance/diode drop at the secondary side of the flyback converter since the current approaches zero near the end of the secondary stroke. In an example, the ramp signal is generated from the scaled AC feedback signal and the peak value threshold voltage is auto-adjusted on a per-cycle basis based on process-performance (p-p) value of the ramp signal, and the scaled AC feedback signal is sampled when the ramp signal drops below the peak value threshold voltage during the second secondary stroke.

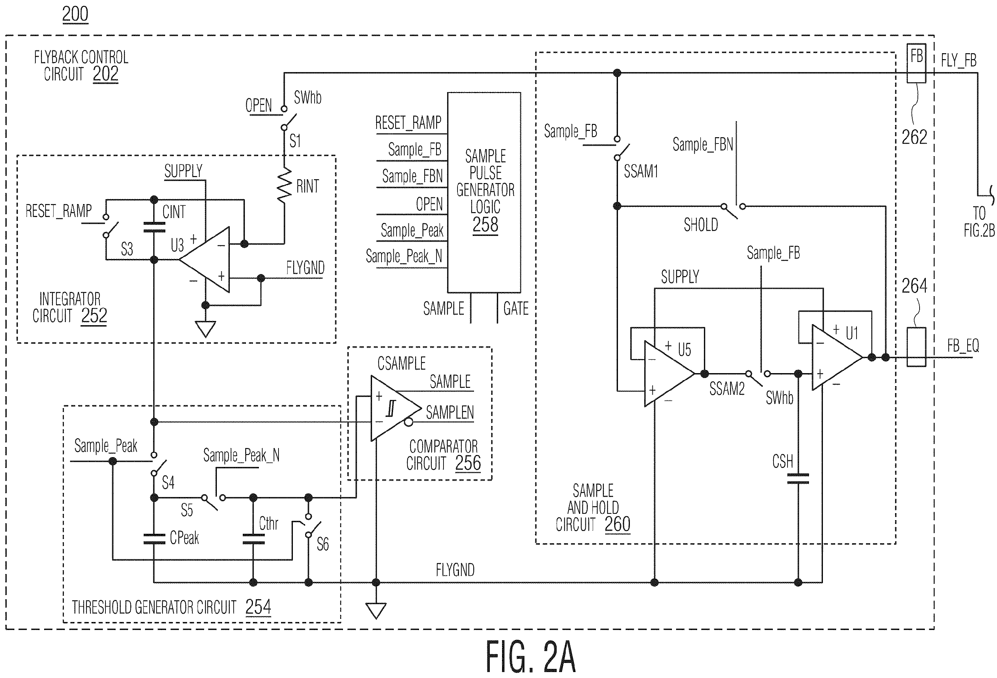

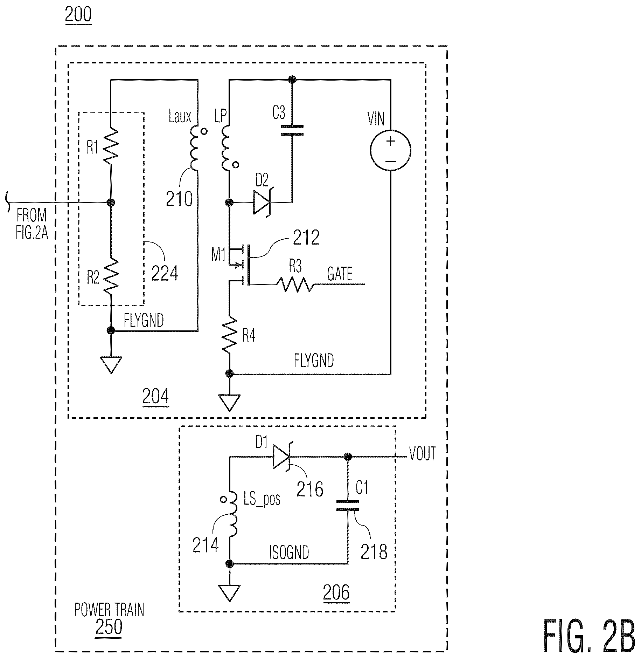

Figs. 2A and 2B depict an example of a power train 250 (Fig. 2B) and a flyback control circuit 202 (Fig. 2A) of a flyback converter 200 (Figs. 2A and 2B) that is configured to sample a scaled AC feedback signal as disclosed herein. With reference to Fig. 2B, the power train of the flyback converter includes a primary side 204 and a secondary side 206 similar to the flyback converter 100 described with reference to Fig. 1. The primary side of the power train includes a primary winding 208 (LP), an auxiliary winding 210 (Laux), a resistor divider 224 that includes resistor (R1) and resistor (R2), a switch 212 (M1), a resistor (R3), a resistor (R4), a capacitor (C3), a diode (D2), a voltage source (VIN), and ground (FLYGND). The secondary side 206 of the power train 250 includes a secondary winding 214 (LS_pos), a diode 216 (D1), a capacitor 218 (C1), a voltage output (VOUT), and a ground (ISOGND).

With reference to Fig. 2A, the flyback control circuit 202 includes an integrator circuit 252, a threshold generator circuit 254, a comparator circuit 256, sample pulse generator logic 258, and a sample and hold circuit 260. The flyback control circuit 202 is coupled to the power train 250 via a feedback interface 262 (FLY_FB) and an equivalent feedback interface 264 (FB_EQ). Although not shown in Figs. 2A and 2B, the equivalent feedback interface (FB_EQ) may be coupled to the switch 212 (M1) on the primary side 204 of the power train via an SR latch and driver circuit as described with reference to Fig. 1.

The integrator circuit 252 is coupled to the feedback interface 262 via a switch (S1) that is controlled by a signal (Open). The integrator circuit includes a resistor (RINT), a comparator (U3), a capacitor (CINT), and a switch (S3). The switch (S3) is controlled by a signal (RESET_RAMP) and the integrator circuit outputs a ramp signal (Ramp) in response to the scaled AC feedback signal.

The threshold generator circuit 254 is coupled to the integrator circuit 252 to receive the ramp signal (Ramp) and includes a switch (S4), a switch (S5), a switch (S6), a capacitor (Cpeak), and a capacitor (Cthreshold). The switches and capacitors form a charge redistribution network, the switches (S4 and S6) are controlled by signal (Sample_Peak), and the switch S5 is controlled by signal (Sample_Peak_N). In operation, the threshold generator circuit 254 generates a threshold voltage (Vthreshold) based on the peak voltage of the ramp signal (e.g., starting at zero). Redistributing charge from the capacitor (Cpeak) to the capacitors (Cpeak + Cthreshold) gives the ratio of where the threshold voltage (Vthreshold) is compared to the peak voltage of the ramp signal (Ramp). In an example, charge sharing between the capacitors to produce the threshold voltage (Vthreshold can be characterized as:

$$Qinitial = (Cpeak*Vpeak)+(Cthreshold*0)$$

$$Qfinal = Vthreshold*(Cpeak+Cthreshold)$$

$$Qfinal = Qinitial \rightarrow Vthreshold+Vpeak*(Cthreshold/(Cpeak+Cthreshold)).$$

The comparator circuit 256 includes a comparator (CSAMPLE) that is coupled to the integrator circuit 252 to receive the ramp signal (Ramp) and coupled to the threshold generator circuit to receive the threshold voltage (Vthreshold). The comparator circuit compares the ramp signal (Ramp) to the threshold voltage (Vthreshold) and outputs a signal (Sample) to the sample pulse generator logic 258 when the ramp signal (Ramp) crosses the threshold voltage (Vthreshold). For example, the comparator outputs a signal edge when the ramp signal (Ramp) drops below the threshold voltage (Vthreshold).

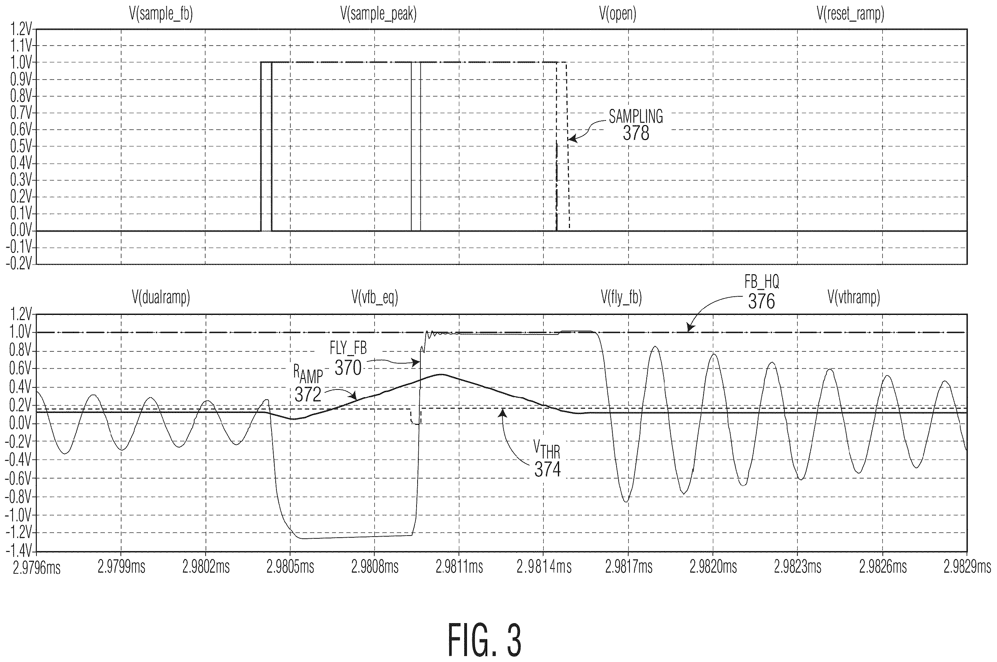

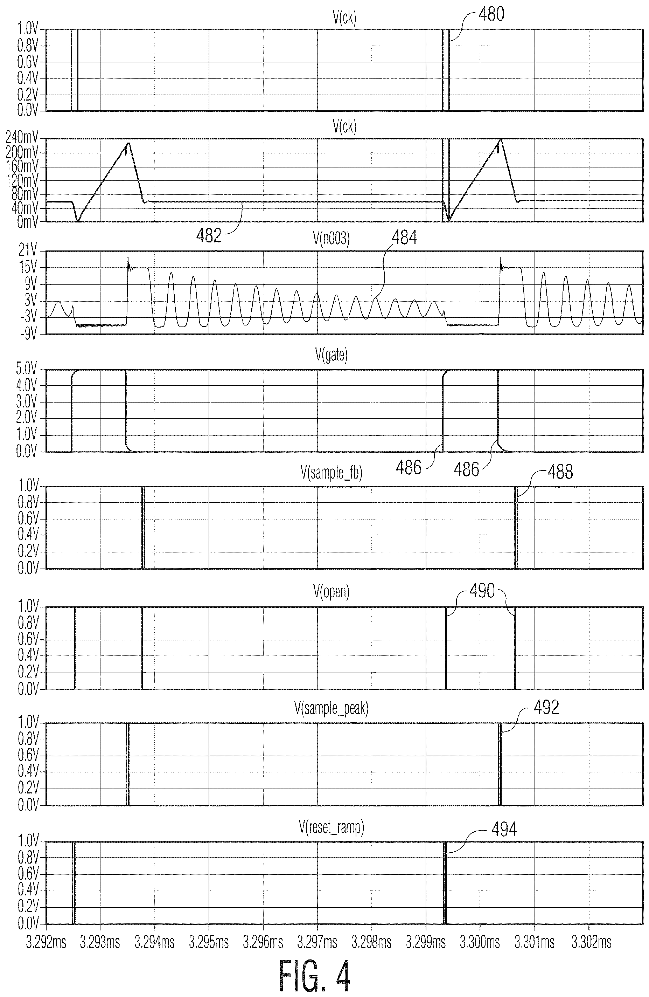

The sample pulse generator logic 258 includes logic configured to output control signals, including RESET_RAMP, Sample_FB, Sample_FBN, Open, Sample_Peak, and Sample_Peak_N in response to the input signals Sample and GATE, where GATE is a switch control signal that controls the switch 212 (M1) of the primary side 204 of the power train 250. In an example, the sample pulse generator logic is implemented in hardware as a state machine although other configurations are possible. In an example, the sample pulse generator logic is configured to generate signals to implement operations as described with reference to Figs. 3 and 4.

The sample and hold circuit 260 includes a switch (SSAM1), a switch (SSAM2), a switch (SHOLD), a comparator (U1), a comparator (U5), and a capacitor (CSH). In operation, the sample and hold circuit samples the scaled AC feedback signal at designated times and outputs a sample of the scaled AC feedback signal. The timing of the sampling is controlled by signals (e.g., Sample_FB and Sample_FBN) from the sample pulse generator logic 258.

Operation of the flyback control circuit 202 of Figs. 2A and 2B is described with reference to Figs. 2A, 2B, and 3. Fig. 3 is a signal diagram that shows time-aligned signals, including a scaled AC feedback signal 370 (scaled FB), a ramp signal 372 (Ramp), a voltage threshold 374 (Vthreshold), a sampled AC feedback signal 376 (FB sampled), and sampling timing 378.

With reference to the integrator circuit 252 in Fig. 2A and the scaled AC feedback signal 370 (scaled FB) in Fig. 3, the scaled AC feedback signal (scaled FB) is integrated via the integrator circuit 252, including the comparator (U3), the capacitor (CINT), and the resistor (RINT) to generate the ramp signal 372 (Ramp). In the example of Fig. 3, the shape of the ramp signal 372 (Ramp) is triangular, starting from flyback ground potential (FLYGND). In an example, the switch (S3) of the integrator circuit 252 resets the capacitor (CINT) of the integrator circuit at each switching cycle, e.g., in response to a reset signal (RESET_RAMP) from the sample pulse generator logic 258.

As shown in Fig. 3, the scaled AC feedback signal 370 is square bipolar, with the negative portion first. Because the scaled AC feedback (FB) signal is square bipolar, with the negative portion first, the ramp signal 372 (Ramp) will rise from the ground potential (FLYGND) upon being reset. At the power switch (M1) gate turnoff, the scaled AC feedback signal will flip polarity and its value is a scaled version of the secondary voltage. Subsequent to the gate turnoff, the ramp signal (Ramp) begins to fall and moves linearly, for example, to zero when the secondary current is going to a zero value.

The threshold generator circuit 254 detects the peak voltage of the ramp signal 372 (Ramp) and samples the peak voltage of the ramp signal (Ramp) in the capacitor (Cpeak). For example, the peak voltage of the ramp signal (Ramp) is sampled when the switches S4 and S6 are on (closed) and the switch S5 is off (open) in response the Sample_Peak_and Sample_Peak_N signals from the sample pulse generator logic 258. In an example, the Sample_Peak signal is triggered by turnoff of the GATE signal. The peak value of the ramp signal (Ramp) is then scaled by the charge redistribution network formed by capacitors (Cpeak and Cthreshold), using switches (e.g., S4, S5, and S6) and the corresponding synchronization signals (Sample_Peak and Sample_Peak_N). For example, a scaled version of the peak ramp signal is provided to the comparator circuit 256 when the switches S4 and S6 are off (open) and the switch S5 is on (closed) in response the Sample_Peak and Sample_Peak_N signals from the sample pulse generator logic. The residual voltage on the capacitor (Cthreshold) is used as a reference voltage (Vthreshold) for the comparator (CSAMPLE) of the comparator circuit 256. That is, the comparator (CSAMPLE) compares the ramp signal (Ramp) to the threshold voltage (Vthreshold) as a reference and outputs a signal (Sample). When the voltage of the ramp signal (Ramp) crosses (falling) the threshold voltage (Vthreshold), the capacitor (CSAMPLE) toggles and a sampling pulse 378 (Sample) is generated by a signal edge, triggering the sample pulse logic generator to initiate sampling of the instantaneous voltage of the scaled AC feedback signal 372 on the flyback interface (FLY_FB). The sampled voltage 376 of the scaled AC feedback signal is used as a feedback signal (FB_EQ) for the flyback converter. In an example, the threshold voltage (Vthreshold) is chosen close to zero to minimize the voltage drops in the secondary loop, due to coil resistance, diode drop etc.

Fig. 4 is a signal diagram that shows time-aligned signals, including a clock signal 480 (Vck), a ramp signal 482 (Vdualramp), a scaled AC feedback signal 484 (Vn003), a gate signal 486 (Vgate), a feedback sample signal 488 (Vsample_fb), an open signal 490 (Vopen), a peak sample signal 492 (sample_peak), and a reset ramp signal 494 (Vreset_ramp).

In an example, the clock signal 480 (Vck) controls the duty cycle of the flyback converter, the ramp signal 482 (Vdualramp) represents the output from the integrator circuit, the scaled AC feedback signal 484 (Vn003) represents the voltage of the scaled AC feedback signal, the gate signal 486 (Vgate) represents the primary power switch (M1) being turned on and off, the feedback sample signal 488 (Venhsample_fb) indicates when the scaled AC feedback signal is sampled, the open signal 490 (Vopen) indicates when the switch (S1) is turned on and off, the peak sample signal 492 (sample_peak) indicates when the peak value of the ramp signal is sampled, and the reset ramp signal 494 (Vreset_ramp) indicates when the integrator circuit is reset. As indicated by the signal timing of Fig. 4, the scaled AC feedback signal is sampled near the end of the secondary stroke of the scaled AC feedback signal, which is triggered by the ramp signal (Vdualramp) dropping below the voltage threshold.

In an example, the equivalent impedance of the AC feedback scaling network is configured to fit the desired switching frequency range of the flyback converter. In one example, RINT can be sized zero if the external network has a suitably high impedance. Although the actual implementation dictates the sizing trade-offs.

In an example, the scaled AC feedback signal can be derived from the primary winding with a suitable divider and active level shifter. The auxiliary winding (Laux) as depicted in Figs. 1 and 2B is shown for explanation purposes.

The integrator circuit 252 could be implemented in different configurations than the configuration shown in Fig. 2A. In an example, the integrator circuit could include a capacitor and a suitable transconductor.

The threshold generator circuit 254 may be implemented in different configurations than the configuration shown in Fig. 2A. In an example, the threshold generator circuit can be implemented with a different peak detector and divided buffer arrangement, which may result in a larger circuit size. In an example, the capacitors, Cpeak and Cthreshold, may each be implemented with more than one capacitor. In an example, the threshold generator circuit may be implemented in digital logic upon receiving a digital representation of the ramp signal. For example, the threshold generator may be implemented in a digital processor configured to model the capacitors, Cpeak and Cthreshold.

In an example, the sampled AC feedback signal (FB_EQ) is output from the flyback control circuit and used to control a gate driver circuit. For example, the sampled AC feedback signal may be provided to an error amplifier such as the error amplifier 134 shown in Fig. 1. The gate driver circuit drives the gate of the primary side of the flyback converter in response to the sampled AC feedback signal (FB_EQ).

In the example of Figs. 2A and 2B, the sampled AC feedback signal (FB_EQ) is generated using a double stage sample and hold circuit. This is related to the inverting nature of the following stage (not reported for clarity), namely the loop error amplifier and compensator. In another embodiment, using a high input impedance compensator may result in removal of the output buffer of the sample and hold circuit.

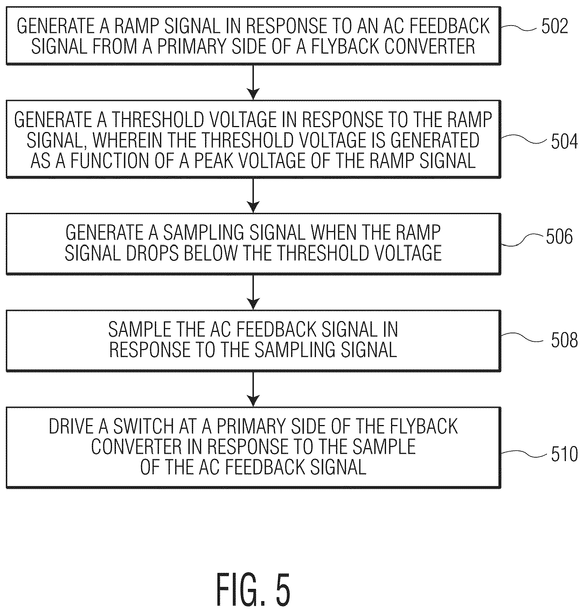

Fig. 5 is a process flow diagram of an example method for controlling a flyback converter. According to the method, at block 502, a ramp signal is generated in response to an AC feedback signal from a primary side of a flyback converter. At block 504, a threshold voltage is generated in response to the ramp signal, wherein the threshold voltage is generated as a function of a peak voltage of the ramp signal. At block 506, a sampling signal is generated when the ramp signal drops below the threshold voltage. At block 508, the AC feedback signal is sampled in response to the sampling signal. At block 510, a switch at a primary side of the flyback converter is driven in response to the sample of the AC feedback signal. In an example, the method may be implemented by a circuit as described with reference to Figs. 1 - 4.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

The above-described operations of a flyback converter and control circuitry can be implemented in hardware, firmware, or a combination thereof, or implemented in a combination of hardware and software, or implemented in a combination of firmware and software, or implemented in a combination of hardware, firmware, and software.

Although the operations of the method(s) herein are shown and described in a particular order, the order of the operations of each method may be altered so that certain operations may be performed in an inverse order or so that certain operations may be performed, at least in part, concurrently with other operations. In another embodiment,

6

instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

**Claims**

1. A control circuit comprising:

   an integrator circuit configured to output a ramp signal in response to an AC feedback signal from a primary side of a flyback converter;
   a threshold generator circuit configured to output a threshold voltage in response to the ramp signal, wherein the threshold voltage is generated as a function of a peak voltage of the ramp signal;
   a comparator circuit configured to compare the ramp signal to the threshold voltage and to output a sampling signal when the ramp signal drops below the threshold voltage; and
   a sample and hold circuit configured to sample the AC feedback signal in response to the sampling signal and to output a sample of the AC feedback signal that is used to control the flyback converter.

2. The control circuit of claim 1, wherein the integrator circuit is configured to integrate the AC feedback signal to generate the ramp signal, and wherein the threshold generator circuit includes a first capacitor and a second capacitor, wherein the threshold voltage is a function of a ratio of a capacitance of the first capacitor to a sum of the capacitance of the first capacitor plus a capacitance of the second capacitor.

3. The control circuit of claim 1 or 2, wherein the threshold generator circuit includes a first capacitor and a second capacitor, wherein the threshold voltage is a function of a ratio of a capacitance of the first capacitor to a sum of the capacitance of the first capacitor plus a capacitance of the second capacitor.

4. The control circuit of any preceding claim, wherein the threshold generator circuit includes a first capacitor and a second capacitor, wherein the threshold voltage is a function of the peak voltage of the ramp signal and a ratio of a capacitance of the first capacitor to a sum of the capacitance of the first capacitor plus a capacitance of the second capacitor.

5. The control circuit of any preceding claim, wherein the threshold generator circuit includes a first capacitor (Cthreshold) and a second capacitor (Cpeak), wherein the threshold voltage (Vthreshold) is determined as a function of the peak voltage of the ramp signal (Vpeak) as:

$$\text{Vthreshold} = \text{Vpeak} \times (\text{Cthreshold}/(\text{Cpeak}+\text{Cthreshold})).$$

6. The control circuit of any preceding claim, wherein the integrator circuit is configured to integrate the AC feedback signal to generate the ramp signal.

7. The control circuit of claim 6, wherein the integrator circuit includes an integrator resistor, an integrator capacitor, and integrator comparator.

8. The control circuit of claim 7, wherein the integrator circuit further includes a reset switch configured to reset the integrator capacitor at each switching cycle of the flyback converter.

9. The control circuit of any preceding claim, further comprising sample pulse generator logic configured to generate a feedback sample signal in response to the ramp signal dropping below the threshold voltage.

10. The control circuit of any preceding claim, further comprising a voltage divider to scale the AC feedback signal prior to the integrator circuit.

11. The control circuit of any preceding claim, further comprising a driver circuit configured to drive a switch at the primary side of the flyback converter in response to the sample of the AC feedback signal from the sample and hold circuit.

12. A method for controlling a flyback converter, the method comprising:

   generating a ramp signal in response to an AC feedback signal from a primary side of the flyback converter;
   generating a threshold voltage in response to the ramp signal, wherein the threshold voltage is generated as a function of a peak voltage of the ramp signal;
   generating a sampling signal when the ramp signal drops below the threshold voltage;
   sampling the AC feedback signal in response to the sampling signal; and
   driving a switch at a primary side of the flyback converter in response to the sample of the AC feedback signal.

13. The method of claim 12, wherein generating the ramp signal includes integrating the AC feedback signal, and wherein generating the threshold voltage includes obtaining a ratio of a capacitance of a first capacitor to a sum of the capacitance of the first capacitor plus a capacitance of a second capacitor upon exposure to the ramp signal.

14. The method of claim 12 or 13, wherein generating the ramp signal includes integrating the AC feedback signal, and wherein generating the threshold voltage includes obtaining a ratio of a capacitance of a first capacitor to a sum of the capacitance of the first capacitor plus a capacitance of a second capacitor upon exposure to the ramp signal, and wherein the threshold voltage is a function of the peak voltage of the ramp signal and the ratio of the capacitance of the first capacitor to the sum of the capacitance of the first capacitor plus the capacitance of the second capacitor.

15. The method of any one of claims 12 to 14, wherein generating the ramp signal includes integrating the AC feedback signal.

FIG. 1

FIG. 2A

FIG. 2B

FIG. 3

FIG. 4

GENERATE A RAMP SIGNAL IN RESPONSE TO AN AC FEEDBACK
SIGNAL FROM A PRIMARY SIDE OF A FLYBACK CONVERTER — 502

GENERATE A THRESHOLD VOLTAGE IN RESPONSE TO THE RAMP
SIGNAL, WHEREIN THE THRESHOLD VOLTAGE IS GENERATED
AS A FUNCTION OF A PEAK VOLTAGE OF THE RAMP SIGNAL — 504

GENERATE A SAMPLING SIGNAL WHEN THE RAMP
SIGNAL DROPS BELOW THE THRESHOLD VOLTAGE — 506

SAMPLE THE AC FEEDBACK SIGNAL IN
RESPONSE TO THE SAMPLING SIGNAL — 508

DRIVE A SWITCH AT A PRIMARY SIDE OF THE FLYBACK
CONVERTER IN RESPONSE TO THE SAMPLE
OF THE AC FEEDBACK SIGNAL — 510

FIG. 5

**EUROPEAN SEARCH REPORT**

**Application Number**

EP 25 22 1529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 424 098 A1 (NXP BV [NL]) 29 February 2012 (2012-02-29) * figure 3 * * figure 5 * * figure 7 * * figure 8 * * paragraph [0011] * * paragraph [0045] * * paragraph [0070] * * paragraph [0072] * * paragraph [0082] * ----- | 1-15 | INV. H02M1/00 H02M3/335 |
| A | US 2003/063026 A1 (NANDY TAPAS [IN]) 3 April 2003 (2003-04-03) * figure 3 * ----- | 1-15 | |

TECHNICAL FIELDS SEARCHED (IPC)

H02M

The present search report has been drawn up for all claims

| Place of search | Date of completion of the search | Examiner |
|---|---|---|
| The Hague | 14 April 2026 | Kafadar, Ahmet |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 1529

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2026

| Patent document cited in search report | Publication date | Patent family member(s) | | Publication date |
|---|---|---|---|---|
| EP 2424098 A1 | 29-02-2012 | NONE | | |
| US 2003063026 A1 | 03-04-2003 | EP | 1303048 A1 | 16-04-2003 |
| | | JP | 2003124809 A | 25-04-2003 |
| | | US | 2003063026 A1 | 03-04-2003 |

EPO FORM P0459

For more details about this annex : see Official Journal of the European Patent Office, No. 12/82